# FASCICULE DE BREVET EUROPEEN

(11) **EP 4 457 142 B1**
(45) Date de publication et mention de la délivrance du brevet: **11.03.2026**
(21) Numéro de dépôt: 22850659.8
(22) Date de dépôt: 21.12.2022
(51) Int. Cl.: B64D 27/24

(54) **SYSTÈME DE PROPULSION ÉLECTRIQUE POUR VÉHICULE AÉRIEN ET VÉHICULE AÉRIEN COMPORTANT UN TEL SYSTÈME DE PROPULSION ÉLECTRIQUE**
ELEKTRISCHES ANTRIEBSSYSTEM FÜR LUFTFAHRZEUGE UND LUFTFAHRZEUGE MIT EINEM SOLCHEN SYSTEM
AERIAL VEHICLE ELECTRICAL PROPULSION SYSTEM AND AERIAL VEHICLE COMPRISING SUCH A SYSTEM

(30) Priorité: 27.12.2021 FR 2114538
(43) Date de publication de la demande: 06.11.2024
(73) Titulaire: Safran Electrical & Power, 31702 Blagnac Cedex (FR)
(72) Inventeur: VALIRE, Jérôme, 31702 BLAGNAC CEDEX (FR)
(74) Mandataire: Ernest Gutmann - Yves Plasseraud S.A.S.
(86) Numéro de dépôt international: PCT/FR2022/052468
(87) Numéro de publication internationale: WO 2023/126599

(56) Documents cités:
- CN-A- 113 002 784
- US-A1- 2016 107 758
- US-A1- 2018 312 248

## Description

### Domaine technique

La présente invention appartient au domaine des véhicules aériens à propulsion électrique ou hybride, et concerne plus particulièrement un système de propulsion électrique pour de tels véhicules aériens.

### Etat de la technique

De nos jours, il existe de plus en plus de véhicules aériens équipés de systèmes de propulsion électriques. C'est le cas notamment pour des véhicules aériens sans passagers (« unmanned aerial vehicle » ou UAV dans la littérature anglosaxonne) tels que des drones, ou encore pour des véhicules aériens avec passagers, par exemple pour la mobilité urbaine (taxis volants, etc.).

Un système de propulsion électrique pour véhicule aérien utilise plusieurs moteurs électriques pour assurer le décollage, le vol et l'atterrissage du véhicule aérien. Les moteurs électriques sont alimentés par des batteries d'alimentation qui permettent d'assurer la réserve d'énergie électrique nécessaire pour la durée de la mission du véhicule aérien.

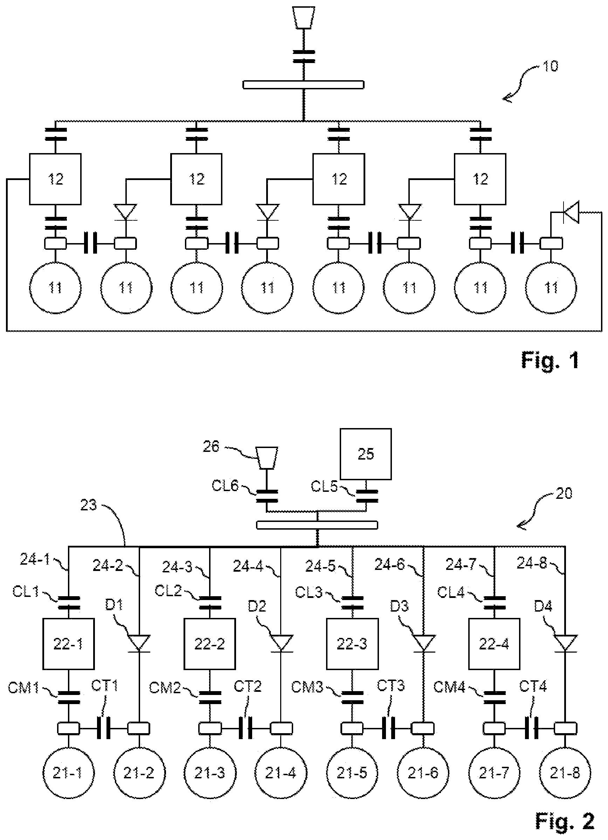

La figure 1 représente schématiquement un exemple de système 10 de propulsion électrique selon l'art antérieur.

Tel qu'illustré par la figure 1, le système 10 de propulsion électrique comporte plusieurs moteurs électriques 11 alimentés par plusieurs batteries d'alimentation 12. Les moteurs électriques 11 sont reliés aux batteries d'alimentation par un réseau de distribution électrique. Dans l'exemple illustré par la figure 1, chaque batterie d'alimentation 12 alimente en principe deux moteurs électriques, et le réseau de distribution électrique intègre des mécanismes de reconfiguration permettant, en cas de défaillance d'une batterie d'alimentation (par exemple en cas de charge insuffisante de celle-ci), de connecter les moteurs électriques qui étaient alimentés par la batterie d'alimentation défaillante à d'autres batteries d'alimentation non défaillantes. De tels mécanismes de reconfiguration permettent donc de garder un contrôle du véhicule aérien en cas de défaillance d'une batterie d'alimentation, pour notamment permettre de réaliser un atterrissage d'urgence en toute sécurité.

Toutefois, les architectures connues de systèmes de propulsion électrique pour véhicules aériens, telle que l'architecture illustrée par la figure 1, nécessitent une parfaite connaissance de l'énergie électrique disponible dans chaque batterie d'alimentation pour garantir une mission en toute sécurité. En effet, l'énergie électrique disponible dans chaque batterie d'alimentation doit pouvoir être estimée avec suffisamment de précision pour pouvoir indiquer avec une bonne fiabilité à un utilisateur du véhicule aérien l'autonomie dudit véhicule aérien, pour que l'utilisateur puisse planifier la mission du véhicule aérien et savoir quand il va devoir réaliser un atterrissage.

En pratique, il est difficile d'avoir une bonne connaissance de l'énergie électrique disponible dans une batterie d'alimentation car celle-ci dépend de nombreux paramètres dont notamment l'environnement (température, humidité, etc.) et de l'historique d'utilisation de chaque batterie d'alimentation. En outre, la précision de l'estimation de l'énergie électrique disponible dans une batterie d'alimentation tend à diminuer avec le niveau de charge de cette batterie d'alimentation. En d'autres termes, moins il y a d'énergie électrique disponible dans une batterie d'alimentation et plus il est difficile d'avoir une estimation précise de cette énergie électrique disponible.

En pratique, du fait de cette incertitude sur l'estimation de l'énergie électrique disponible dans chaque batterie d'alimentation, il est nécessaire de définir et de conserver une marge d'énergie électrique importante pour essayer d'avoir, malgré l'incertitude sur l'estimation de celle-ci, une énergie électrique disponible suffisante pour réaliser une procédure d'atterrissage d'urgence. La marge est d'autant plus importante qu'en cas de défaillance d'une batterie d'alimentation, un nombre réduit de batteries d'alimentation doit alimenter tous les moteurs électriques. La nécessité de prévoir une marge importante implique également d'augmenter la masse embarquée dans le véhicule aérien. Il est connu de la technique antérieure les documents US 2018/312248 A1, CN 113 002 784 A et US 2016/107758 A1.

### Exposé de l'invention

La présente divulgation a pour objectif de remédier à tout ou partie des limitations des solutions de l'art antérieur, notamment celles exposées ci-avant, en proposant une solution permettant notamment de réduire la marge en énergie électrique nécessaire et d'assurer qu'en cas de défaillance d'une batterie d'alimentation, l'énergie électrique restante soit suffisante pour réaliser les manœuvres d'urgence et notamment un atterrissage d'urgence.

A cet effet, et selon un premier aspect, il est proposé un système de propulsion électrique pour véhicule aérien, comportant une pluralité de moteurs électriques, une pluralité de batteries d'alimentation pour alimenter lesdits moteurs électriques en énergie électrique, et un réseau de distribution électrique reliant lesdites batteries d'alimentation aux moteurs électriques. Ledit système de propulsion électrique comporte en outre une batterie d'alimentation additionnelle, dite batterie de secours, adaptée à être connectée aux moteurs électriques par le réseau de distribution électrique, et ledit système de propulsion électrique est configuré pour alimenter les moteurs électriques selon au moins deux modes d'alimentation différents :
- un mode d'alimentation dit normal, dans lequel la batterie de secours n'alimente aucun des moteurs électriques, lesdits moteurs électriques étant alimentés par les batteries d'alimentation,
- un mode d'alimentation dit de secours, dans lequel la batterie de secours alimente au moins un moteur électrique.

Ainsi, le système de propulsion électrique est configuré pour alimenter les moteurs électriques selon au moins deux modes d'alimentation différents, à savoir un mode de propulsion normal utilisé par défaut lors des phases de décollage, de vol et d'atterrissage, et un mode d'alimentation de secours utilisé lorsqu'au moins une batterie d'alimentation est défaillante (dysfonctionnement de la batterie d'alimentation ou niveau de charge faible).

En outre, le système de propulsion électrique selon la présente divulgation embarque une batterie d'alimentation additionnelle, dite batterie de secours, qui n'est pas utilisée dans le mode d'alimentation normal, et qui est utilisée uniquement dans le mode d'alimentation de secours, pour prendre le relais d'une batterie d'alimentation défaillante.

Ainsi, en cas de défaillance d'une batterie d'alimentation, celle-ci peut être remplacée par la batterie de secours. Etant donné que la batterie de secours n'est pas utilisée dans le mode d'alimentation normal, son niveau de charge est en principe maximal lorsque le système de propulsion électrique passe en mode d'alimentation de secours, de sorte que l'énergie électrique qu'elle contient est connue avec une bonne précision. En dimensionnant la batterie de secours pour permettre d'alimenter les moteurs électriques pendant une durée prédéterminée permettant d'effectuer au moins un atterrissage d'urgence, alors la marge d'énergie électrique embarquée dans le véhicule aérien peut être significativement réduite par rapport aux solutions de l'art antérieur. En effet, dans les solutions de l'art antérieur, il est nécessaire de prévoir une marge pour chaque batterie d'alimentation, du fait que chaque batterie d'alimentation peut être utilisée pour palier à une défaillance d'une autre batterie d'alimentation et à un moment où le niveau de charge, potentiellement faible, ne permet pas d'estimer précisément l'énergie électrique disponible dans chaque batterie d'alimentation. Selon la présente divulgation, la batterie de secours peut alimenter tous les moteurs électriques et, quand elle commence à être utilisée (c'est-à-dire au début de la situation d'urgence créée par la défaillance d'une batterie d'alimentation), la batterie de secours a toujours un niveau de charge maximal permettant de connaître avec précision l'énergie électrique disponible.

Dans des modes particuliers de réalisation, le système de propulsion électrique peut comporter en outre l'une ou plusieurs des caractéristiques optionnelles suivantes, prises isolément ou selon toutes les combinaisons techniquement possibles.

Dans des modes particuliers de réalisation, le système de propulsion électrique comporte un module de détection de défaillance des batteries d'alimentation et un module de commande configuré pour mettre en œuvre le mode d'alimentation normal lorsqu'aucune défaillance de batterie d'alimentation n'est détectée et pour mettre en œuvre le mode d'alimentation de secours lorsqu'une défaillance d'au moins une batterie d'alimentation est détectée.

Dans des modes particuliers de réalisation, le réseau de distribution électrique comporte des premiers moyens de commutation adaptés à connecter/déconnecter la batterie de secours des moteurs électriques, et le module de commande est configuré pour commander les premiers moyens de commutation pour :
- dans le mode d'alimentation normal : déconnecter la batterie de secours des moteurs électriques,
- dans le mode d'alimentation de secours : connecter la batterie de secours à au moins un moteur électrique.

Dans des modes particuliers de réalisation, le réseau de distribution électrique comporte en outre des seconds moyens de commutation adaptés à connecter/déconnecter les batteries d'alimentation aux moteurs électriques, et le module de commande est configuré pour commander les seconds moyens de commutation pour :
- dans le mode d'alimentation normal : connecter les batteries d'alimentation aux moteurs électriques,
- dans le mode d'alimentation de secours : déconnecter chaque batterie d'alimentation détectée comme défaillante par le module de détection de défaillance.

Dans des modes particuliers de réalisation, la batterie de secours est de tension nominale inférieure aux tensions nominales respectives des batteries d'alimentation.

Dans des modes particuliers de réalisation, la batterie de secours est de tension nominale inférieure aux tensions nominales respectives des batteries d'alimentation, et le réseau de distribution électrique est configuré de sorte que la batterie de secours est connectée aux moteurs électriques dans le mode d'alimentation normal et dans le mode d'alimentation de secours, et de sorte que la batterie de secours commence à alimenter un moteur électrique lorsque la tension aux bornes de la batterie d'alimentation qui alimente ledit moteur électrique devient inférieure à la tension aux bornes de la batterie de secours.

Dans des modes particuliers de réalisation, la batterie de secours est connectée à chaque moteur électrique en parallèle d'au moins une batterie d'alimentation.

Dans des modes particuliers de réalisation, le système de propulsion électrique comporte un module de détection de défaillance configuré pour détecter le passage du mode d'alimentation normal vers le mode d'alimentation de secours.

Dans des modes particuliers de réalisation, le réseau de distribution électrique comporte des moyens de commutation adaptés à connecter/déconnecter les batteries d'alimentation aux moteurs électriques, et ledit système de propulsion électrique comporte un module de commande configuré pour commander les moyens de commutation pour :
- dans le mode d'alimentation normal : connecter les batteries d'alimentation aux moteurs électriques,
- dans le mode d'alimentation de secours : déconnecter chaque batterie d'alimentation détectée comme défaillante par le module de détection de défaillance.

Dans des modes particuliers de réalisation, le module de détection de défaillance est configuré pour émettre une notification à destination d'un utilisateur du véhicule aérien lorsque les moteurs électriques sont alimentés selon le mode d'alimentation de secours. L'utilisateur peut être un passager du véhicule aérien ou bien au sol, par exemple dans le cas d'un véhicule aérien n'accueillant pas de passagers (UAV) et/ou piloté à distance.

Selon un second aspect, la présente divulgation concerne un véhicule aérien comportant un système de propulsion électrique selon l'un quelconque des modes de réalisation de la présente divulgation. Le véhicule aérien peut être à propulsion exclusivement électrique ou bien à propulsion hybride.

### Présentation des figures

L'invention sera mieux comprise à la lecture de la description suivante, donnée à titre d'exemple nullement limitatif, et faite en se référant aux figures qui représentent :
Figure 1 : déjà décrite, une représentation schématique d'un système de propulsion électrique selon l'art antérieur,
Figure 2 : une représentation schématique d'un premier exemple de réalisation d'un système de propulsion électrique,
Figure 3 : une représentation schématique d'un second exemple de réalisation d'un système de propulsion électrique,
Figure 4 : une représentation schématique d'un troisième exemple de réalisation d'un système de propulsion électrique.

Dans ces figures, des références identiques d'une figure à une autre désignent des éléments identiques ou analogues. Pour des raisons de clarté, les éléments représentés ne sont pas à l'échelle, sauf mention contraire.

### Description des modes de réalisation

Tel qu'indiqué ci-dessus, la présente divulgation concerne un système 20 de propulsion électrique pour véhicule aérien (non représenté sur les figures). Le véhicule aérien peut être à propulsion exclusivement électrique ou bien à propulsion hybride. En outre, le véhicule aérien peut être un véhicule aérien sans passagers, ou bien un véhicule aérien pouvant accueillir des passagers.

La figure 2 représente schématiquement un exemple de réalisation d'un système 20 de propulsion électrique selon la présente divulgation.

Tel qu'illustré par la figure 2, le système 20 de propulsion électrique comporte tout d'abord un ensemble de moteurs électriques 21 permettant de propulser le véhicule aérien et de réaliser les phases de décollage, de vol et d'atterrissage dudit véhicule aérien. Chacun desdits moteurs électriques 21 peut être de tout type adapté à la propulsion d'un véhicule aérien.

Dans l'exemple non limitatif illustré par la figure 2, le système 20 de propulsion électrique comporte huit (8) moteurs électriques 21. De manière plus générale, le système 20 de propulsion électrique comporte au moins deux moteurs électriques 21, le nombre total de moteurs électriques 21 pouvant varier d'un mode de réalisation à un autre du système 20 de propulsion électrique. Dans la présente divulgation, les moteurs électriques sont désignés collectivement (sans distinction entre eux) par la référence 21, tandis qu'ils sont désignés individuellement par les références respectivement 21-1 à 21-8.

Le système 20 de propulsion électrique comporte également un ensemble de batteries d'alimentation 22 pour alimenter lesdits moteurs électriques 21 en énergie électrique. Dans l'exemple non limitatif illustré par la figure 2, le système 20 de propulsion électrique comporte quatre (4) batteries d'alimentation 22. De manière plus générale, le système 20 de propulsion électrique comporte au moins deux batteries d'alimentation 22, le nombre total de batteries d'alimentation 22 pouvant varier d'un mode de réalisation à un autre du système 20 de propulsion électrique. Dans la présente divulgation, les batteries d'alimentation sont désignées collectivement (sans distinction entre elles) par la référence 22, tandis qu'elles sont désignées individuellement par les références respectivement 22-1 à 22-4.

Le système 20 de propulsion électrique comporte également un réseau de distribution électrique reliant lesdites batteries d'alimentation 22 aux moteurs électriques 21. Le réseau de distribution électrique est constitué par tous les éléments permettant de connecter chaque batterie d'alimentation 22 à chaque moteur électrique 21 qui doit être alimenté par cette batterie d'alimentation 22. Par exemple, le réseau de distribution électrique est constitué par un ensemble de lignes électriques et de composants discrets. Dans l'exemple non-limitatif illustré par la figure 2, le réseau de distribution électrique comporte notamment une ligne principale 23, des lignes d'alimentation 24-1 à 24-8 reliant la ligne principale 23 aux différents moteurs électriques 21-1 à 21-8, et des moyens de commutation (par exemple des contacteurs) permettant de reconfigurer ledit réseau de distribution électrique, qui seront discutés ci-après.

Tel qu'illustré par la figure 2, le système 20 de propulsion électrique comporte également une batterie d'alimentation additionnelle, dite batterie de secours 25, adaptée à être connectée à chacun des moteurs électriques 21 par le réseau de distribution électrique. Il est à noter que le système 20 de propulsion peut également, suivant d'autres exemples de réalisation, comporter plusieurs batteries de secours 25, par exemple à des fins de redondance de la batterie de secours 25. Le cas échéant, les batteries de secours 25 sont adaptées à être connectées aux moteurs électriques 21, par le réseau de distribution électrique, de sorte que chaque moteur électrique 21 peut être alimenté par au moins une des batteries de secours 25. Toutefois, dans des modes préférés de réalisation du système 20 de propulsion électrique, ledit système 20 de propulsion électrique comporte une seule batterie de secours 25, afin de limiter la masse embarquée dans le véhicule aérien.

Dans la suite de la description, on se place dans le cas où le système 20 de propulsion électrique comporte une unique batterie de secours 25, qui correspond donc à des modes préférés de réalisation du système 20 de propulsion électrique permettant de limiter la marge d'énergie électrique et la masse embarquées dans le véhicule aérien.

Dans l'exemple illustré par la figure 2, le réseau de distribution électrique comporte également un port de charge 26, relié à la ligne principale 23, destiné à être relié à une source d'énergie électrique (« Ground Power Unit » ou GPU dans la littérature anglo-saxonne) pour charger les batteries d'alimentation 22 et la batterie de secours 25, lorsque le véhicule aérien est au sol. Le réseau de distribution électrique comporte également des moyens de commutation qui comprennent :
- des contacteurs de ligne CL1 à CL4 permettant de connecter/déconnecter chaque batterie d'alimentation 22-1 à 22-4 de la ligne principale 23,
- un contacteur de ligne CL-5 permettant de connecter/déconnecter la batterie de secours 25 de la ligne principale 23,
- un contacteur de ligne CL6 permettant de connecter/déconnecter le port de charge 26 de la ligne principale 23.

Par exemple, lors de la charge, les contacteurs de ligne CL1 à CL6 sont fermés pour connecter la ligne principale 23 aux batteries d'alimentation 22-1 à 22-4, à la batterie de secours 25 et au port de charge 26. Lorsque la charge est terminée, les contacteurs de ligne CL1 à CL6 sont par exemple ouverts pour déconnecter la ligne principale 23 des batteries d'alimentation 22-1 à 22-4, de la batterie de secours 25 et du port de charge 26.

Dans l'exemple illustré par la figure 2, les moyens de commutation du réseau de distribution électrique comprennent également des contacteurs moteurs CM1, CM2, CM3 et CM4 agencés respectivement sur les lignes d'alimentation 24-1, 24-3, 24-5 et 24-7. Lorsque les contacteurs moteurs CM1, CM2, CM3 et CM4 sont fermés, les batteries d'alimentation 22-1, 22-2, 22-3 et 22-4 sont connectées aux moteurs électriques 21-1, 21-3, 21-5 et 21-7, respectivement. Dans l'exemple illustré par la figure 2, les moyens de commutation du réseau de distribution électrique comprennent également :
- un contacteur de transfert CT1 agencé entre les lignes d'alimentation 24-1 et 24-2,
- un contacteur de transfert CT2 agencé entre les lignes d'alimentation 24-3 et 24-4,
- un contacteur de transfert CT3 agencé entre les lignes d'alimentation 24-5 et 24-6,
- un contacteur de transfert CT4 agencé entre les lignes d'alimentation 24-7 et 24-8.

Lorsque les contacteurs moteurs CM1 à CM4 et les contacteurs de transfert CT1 à CT4 sont fermés, les batteries d'alimentation 22-1, 22-2, 22-3 et 22-4 sont également connectées aux moteurs électriques 21-2, 21-4, 21-6 et 21-8, respectivement.

Dans l'exemple illustré par la figure 2, le réseau de distribution électrique comporte également des diodes D1, D2, D3 et D4 agencées sur les lignes d'alimentation 24-2, 24-4, 24-6 et 24-8, respectivement. Les diodes D1 à D4 permettent le passage d'un courant électrique uniquement depuis la ligne principale 23 vers les moteurs électriques 21-2, 21-4, 21-6 et 21-8.

Le système 20 de propulsion électrique peut également comporter un module de commande (non représenté sur les figures) qui contrôle notamment les contacteurs de ligne CL1 à CL6, les contacteurs moteurs CM1 à CM4 et les contacteurs de transfert CT1 à CT4. Le module de commande comporte par exemple un ou plusieurs processeurs et une ou plusieurs mémoires électroniques (tout type de support d'enregistrement lisible par ordinateur) dans lesquelles est mémorisé un produit programme d'ordinateur, sous la forme d'un ensemble d'instructions de code de programme à exécuter pour contrôler les différents moyens de commutation du réseau de distribution électrique. Alternativement ou en complément, le module de commande comporte un ou plusieurs circuits logiques programmables, de type FPGA, PLD, etc., et/ou circuits intégrés spécialisés (ASIC), et/ou composants électroniques discrets adaptés à contrôler les différents moyens de commutation du réseau de distribution électrique.

Tel qu'indiqué ci-dessus, le système 20 de propulsion électrique est configuré pour alimenter les moteurs électriques 21 selon au moins deux modes d'alimentation différents :
- un mode d'alimentation dit normal, dans lequel la batterie de secours 25 n'alimente aucun des moteurs électriques 21, les moteurs électriques étant alimentés uniquement par les batteries d'alimentation 22,
- un mode d'alimentation dit de secours, dans lequel la batterie de secours 25 alimente au moins un moteur électrique.

Ainsi, la batterie de secours 25 n'est pas sollicitée dans le mode d'alimentation normal, qui est utilisé par défaut lors des phases de décollage, de vol et d'atterrissage du véhicule aérien. Cependant, la batterie de secours 25 est utilisée dans le mode d'alimentation de secours, pour prendre le relais d'une ou plusieurs batteries d'alimentation 22 défaillantes (dysfonctionnement de la batterie d'alimentation 22 ou niveau de charge faible).

Par exemple, dans le mode d'alimentation normal, les contacteurs moteurs CM1 à CM4 et les contacteurs de transfert CT1 à CT4 sont fermés par le module de commande, tandis que les contacteurs de ligne CL1 à CL6 sont ouverts par le module de commande. Ainsi, la batterie de secours 25 n'est connectée à aucun des moteurs électriques 21-1 à 21-4. La batterie d'alimentation 22-1 alimente les moteurs électriques 21-1 et 21-2, la batterie d'alimentation 22-2 alimente les moteurs électriques 21-3 et 21-4, la batterie d'alimentation 22-3 alimente les moteurs électriques 21-5 et 21-6, et la batterie d'alimentation 22-4 alimente les moteurs électriques 21-7 et 21-8.

Dans le mode d'alimentation de secours, le module de commande peut passer le contacteur de ligne CL5 dans l'état fermé, de sorte que la batterie de secours 25 se retrouve connectée à tous les moteurs électriques 21-1 à 21-8, via les lignes d'alimentation respectivement 24-2, 24-4, 24-6 et 24-8, et les contacteurs de transfert CT1 à CT4 à l'état fermé. Le contacteur de ligne CL5 correspond donc à des moyens de commutation permettant de connecter/déconnecter la batterie de secours 25 des moteurs électriques 21.

Afin de savoir quand passer du mode d'alimentation normal au mode d'alimentation de secours, le système 20 de propulsion électrique comporte par exemple un module de détection de défaillance (non représenté sur les figures). Le module de détection de défaillance comporte par exemple un ensemble de capteurs permettant de détecter la défaillance d'une des batteries d'alimentation 22, par exemple en mesurant les tensions aux bornes desdites batteries d'alimentation 22. En effet, un niveau de charge faible d'une batterie d'alimentation 22 entrainera une baisse détectable de la tension à ses bornes, par rapport à une tension nominale de ladite batterie d'alimentation 22. Toutefois, le module de détection de défaillance peut mettre en œuvre tout moyen permettant de détecter la défaillance d'un batterie d'alimentation 22. Ainsi, lorsque le module de détection de défaillance détecte la défaillance d'une batterie d'alimentation 22, le module de commande peut déclencher le passage du mode d'alimentation normal au mode d'alimentation de secours. Dans des modes préférés de réalisation, le module de commande peut également isoler la batterie d'alimentation détectée comme défaillante par le module de détection de défaillance. Par exemple, si la batterie d'alimentation 22-1 a été détectée comme défaillante, alors le module de commande peut ouvrir le contacteur moteur CM1 afin de déconnecter la batterie d'alimentation 22-1 des moteurs électriques 21-1 et 21-2, qui sont alors alimentés par la batterie de secours 25 (le contacteur de transfert CT1 restant à l'état fermé). Les contacteurs moteurs CM1 à CM4 correspondent donc à des moyens de commutation permettant de connecter/déconnecter les batteries d'alimentation 22 des moteurs électriques 21.

Dans l'exemple illustré par la figure 2, dans le mode d'alimentation de secours, la batterie de secours 25 se retrouve connectée à tous les moteurs électriques 21, de sorte qu'elle peut alimenter tous les moteurs électriques 21 même ceux qui sont toujours connectés à des batteries d'alimentation 22 non défaillantes. Dans des modes préférés de réalisation, la batterie de secours 25 est de tension nominale inférieure aux tensions nominales respectives des batteries d'alimentation 22. Par exemple, la tension nominale de la batterie de secours 25 peut être comprise entre 600 Volts (V) et 700 V et la tension nominale des batteries d'alimentation 22 peut être comprise entre 700 V et 800 V. Par conséquent, dans l'exemple de la figure 2 et dans le mode d'alimentation de secours, un moteur électrique 21 ne sera alimenté par la batterie de secours 25 qui si la tension aux bornes du moteur électrique 21 (fournie par une batterie d'alimentation 22) est inférieure à la tension aux bornes de la batterie de secours 25. Cela sera le cas pour un moteur électrique 21 alimenté par une batterie d'alimentation 22 défaillante, mais ce ne sera en général pas le cas pour les autres moteurs électriques 21 alimentés par des batteries d'alimentation 22 non défaillantes. Par conséquent, dans un tel cas, la batterie de secours 25, bien que connectée à tous les moteurs électriques 21, n'alimente pour l'essentiel que les moteurs électriques 21 alimentés par une batterie d'alimentation 22 défaillante. En outre, les batteries d'alimentation 22 non défaillantes ne se déchargent pas vers la batterie de secours 25 du fait de la présence des diodes D1 à D4.

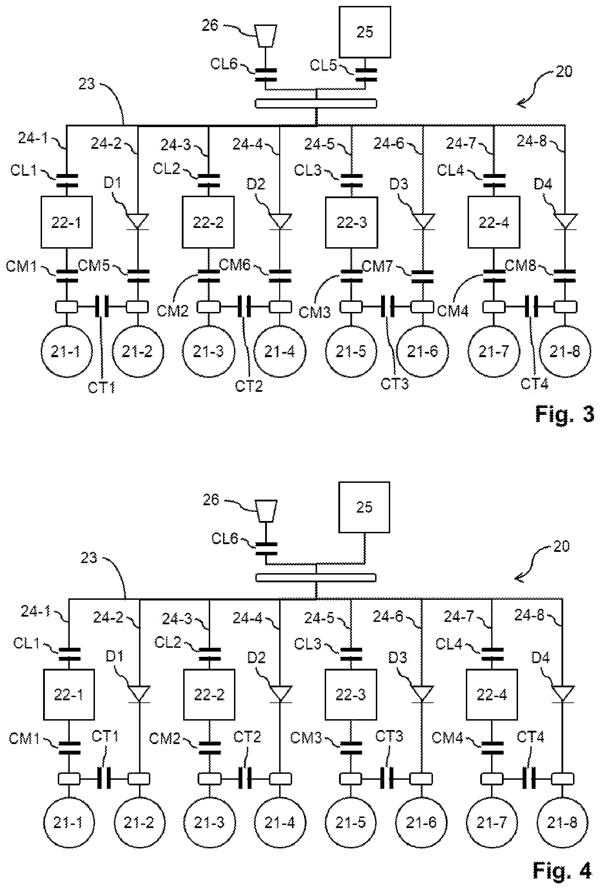

La figure 3 représente schématiquement un autre exemple de réalisation d'un système 20 de propulsion électrique selon la présente divulgation. Outre les éléments déjà décrits en référence à la figure 2, le système 20 de propulsion électrique de la figure 3 comporte des contacteurs moteurs CM5, CM6, CM7 et CM8 agencés sur les lignes d'alimentation 24-2, 24-4, 24-6 et 24-8, respectivement.

Dans l'exemple illustré par la figure 3, dans le mode d'alimentation normal, les contacteurs moteurs CM1 à CM4 et les contacteurs de transfert CT1 à CT4 sont fermés par le module de commande, tandis que les contacteurs de ligne CL1 à CL6 et les contacteurs moteurs CM5 à CM8 sont ouverts par le module de commande.

Dans le mode d'alimentation de secours, le module de commande passe le contacteur de ligne CL5 dans l'état fermé. De préférence, le module de commande passe à l'état fermé uniquement le contacteur moteur, parmi les contacteurs moteurs CM5 à CM8, qui est relié à un moteur électrique 21 alimenté par la batterie d'alimentation 22 défaillante. Par exemple, si la batterie d'alimentation 22 détectée comme défaillante est la batterie d'alimentation 22-1, alors le module de commande passe uniquement le contacteur moteur CM5 à l'état fermé. Rien n'exclut cependant, suivant d'autres exemples, de passer tous les contacteurs moteurs CM5 à CM8 à l'état fermé. Le contacteur de ligne CL5 et les contacteurs moteurs CM5 à CM8 correspondent donc à des moyens de commutation permettant de connecter/déconnecter la batterie de secours 25 des moteurs électriques 21. Comme décrit précédemment, le module de commande peut, dans des modes particuliers de réalisation, isoler la batterie d'alimentation 22 défaillante par une commande adaptée des contacteurs moteurs CM1 à CM4.

La figure 4 représente schématiquement un autre exemple de réalisation d'un système 20 de propulsion électrique selon la présente divulgation. Le système 20 de propulsion électrique de la figure 4 reprend l'ensemble des éléments décrits en référence à la figure 2, à l'exception du contacteur de ligne CL5. Ainsi, dans ce mode de réalisation, la batterie de secours 25 est toujours connectée aux moteurs électriques 21, quel que soit le mode d'alimentation considéré. Cependant, dans ce mode de réalisation, la batterie de secours 25 est de tension nominale inférieure aux tensions nominales respectives des batteries d'alimentation 22, de sorte que la batterie de secours 25 ne se décharge pas (et n'alimente pas les moteurs électriques 21) tant que les tensions aux bornes des batteries d'alimentation 22 sont supérieures à la tension aux bornes de la batterie de secours 25. Cependant, la batterie de secours 25 commence à alimenter un moteur électrique 21 lorsque la tension aux bornes de la batterie d'alimentation 22 qui alimente ce moteur électrique 21 devient inférieure à la tension aux bornes de la batterie de secours 25. Par exemple, la tension nominale de la batterie de secours 25 peut être comprise entre 600 Volts (V) et 700 V et la tension nominale des batteries d'alimentation 22 peut être comprise entre 700 V et 800 V. Ainsi, la batterie de secours 25 prend le relais d'une batterie d'alimentation 22 défaillante de manière automatique, sans avoir à changer l'état des différents moyens de commutation du réseau de distribution électrique et sans avoir à détecter la défaillance de cette batterie d'alimentation 22. Par conséquent, l'intervention d'un module de commande ou d'un module de détection de défaillance n'est pas nécessaire pour passer du mode d'alimentation normal au mode d'alimentation de secours. Toutefois, le système 20 de propulsion électrique peut néanmoins comporter un module de détection de défaillance configuré pour détecter le passage du mode d'alimentation normal vers le mode d'alimentation de secours. Si le module de détection de défaillance est en outre configuré pour détecter quelle batterie d'alimentation 22 est défaillante, alors le module de commande peut, dans des modes particuliers de réalisation, isoler la batterie d'alimentation 22 défaillante par une commande adaptée des contacteurs moteurs CM1 à CM4.

Dans des modes particuliers de réalisation, lorsque le système 20 de propulsion électrique comporte un module de détection de défaillance, alors celui-ci est préférentiellement configuré pour émettre une notification à destination d'un utilisateur du véhicule aérien, pour l'informer que le mode d'alimentation de secours est utilisé. En effet, même si l'utilisation de la batterie de secours 25 permet d'avoir une estimation plus précise de l'énergie électrique disponible, l'utilisateur doit être informé qu'une défaillance de batterie d'alimentation 22 a été détectée afin de déclencher par exemple une procédure d'atterrissage d'urgence. L'utilisateur est par exemple le pilote du véhicule aérien, qui peut être un passager du véhicule aérien ou bien au sol, par exemple dans le cas d'un véhicule aérien piloté à distance.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant des exemples particuliers de réalisation du système 20 de propulsion électrique. D'autres variantes sont envisageables, dès lors qu'elles permettent d'avoir un système 20 de propulsion électrique comportant une batterie de secours 25 qui n'est pas utilisée dans un mode d'alimentation normal des moteurs électriques, de sorte que son niveau de charge est a priori maximal et connu avec précision lorsqu'elle est utilisée dans un mode d'alimentation de secours.

## Revendications

1. Système (20) de propulsion électrique pour véhicule aérien, comportant une pluralité de moteurs électriques (21), une pluralité de batteries d'alimentation (22) pour alimenter lesdits moteurs électriques en énergie électrique, et un réseau de distribution électrique reliant lesdites batteries d'alimentation aux moteurs électriques, ledit système (20) de propulsion électrique comportant une batterie d'alimentation additionnelle, dite batterie de secours (25), adaptée à être connectée aux moteurs électriques par le réseau de distribution électrique, ledit système de propulsion électrique étant configuré pour alimenter les moteurs électriques selon au moins deux modes d'alimentation différents :
- un mode d'alimentation dit normal, dans lequel la batterie de secours (25) n'alimente aucun des moteurs électriques (21), lesdits moteurs électriques étant alimentés par les batteries d'alimentation (22),
- un mode d'alimentation dit de secours, dans lequel la batterie de secours (25) alimente au moins un moteur électrique (21),
**caractérisé en ce que**
la batterie de secours est de tension nominale inférieure aux tensions nominales respectives des batteries d'alimentation, et dans lequel le réseau de distribution électrique est configuré de sorte que la batterie de secours est connectée aux moteurs électriques dans le mode d'alimentation normal et dans le mode d'alimentation de secours, et de sorte que la batterie de secours commence à alimenter un moteur électrique lorsque la tension aux bornes de la batterie d'alimentation qui alimente ledit moteur électrique devient inférieure à la tension aux bornes de la batterie de secours.

2. Système (20) de propulsion électrique selon la revendication 1, dans lequel la batterie de secours est connectée à chaque moteur électrique en parallèle d'au moins une batterie d'alimentation.

3. Système (20) de propulsion électrique selon l'une quelconque des revendications 1 à 2, comportant un module de détection de défaillance configuré pour détecter le passage du mode d'alimentation normal vers le mode d'alimentation de secours.

4. Système (20) de propulsion électrique selon la revendication 3, dans lequel le réseau de distribution électrique comporte des moyens de commutation adaptés à connecter/déconnecter les batteries d'alimentation aux moteurs électriques, ledit système de propulsion électrique comportant un module de commande configuré pour commander les moyens de commutation pour :
- dans le mode d'alimentation normal : connecter les batteries d'alimentation aux moteurs électriques,
- dans le mode d'alimentation de secours : déconnecter des moteurs électriques chaque batterie d'alimentation détectée comme défaillante par le module de détection de défaillance.

5. Système (20) de propulsion électrique selon l'une quelconque des revendications 3 à 4, dans lequel le module de détection de défaillance est configuré pour émettre une notification à destination d'un utilisateur du véhicule aérien lorsque les moteurs électriques sont alimentés selon le mode d'alimentation de secours.

6. Véhicule aérien comportant un système (20) de propulsion électrique selon l'une quelconque des revendications 1 à 5.

## Patentansprüche

1. Elektrisches Antriebssystem (20) für ein Luftfahrzeug, enthaltend eine Vielzahl von Elektromotoren (21), eine Vielzahl von Versorgungsbatterien (22) zur Versorgung der Elektromotoren mit elektrischer Energie und ein Stromverteilungsnetz, das die Versorgungsbatterien mit den Elektromotoren verbindet, wobei das elektrische Antriebssystem (20) eine zusätzliche Versorgungsbatterie, Notstrombatterie (25) genannt, umfasst, die über das Stromverteilungsnetz an die Elektromotoren angeschlossen werden kann, wobei das elektrische Antriebssystem dazu ausgelegt ist, die Elektromotoren in mindestens zwei verschiedenen Versorgungsmodi zu versorgen:
- einem sogenannten normalen Stromversorgungsmodus, in dem die Notstrombatterie (25) keinen der Elektromotoren (21) versorgt, wobei die Elektromotoren von den Versorgungsbatterien (22) versorgt werden,
- einem sogenannten Notstromversorgungsmodus, in dem die Notstrombatterie (25) mindestens einen Elektromotor (21) versorgt, **dadurch gekennzeichnet, dass**
die Notstrombatterie eine Nennspannung aufweist, die niedriger ist als die jeweiligen Nennspannungen der Versorgungsbatterien, wobei das Stromverteilungsnetz so ausgelegt ist, dass die Notstrombatterie im normalen Stromversorgungsmodus und im Notstromversorgungsmodus an die Elektromotoren angeschlossen ist und dass die Notstrombatterie mit der Stromversorgung eines Elektromotors beginnt, wenn die Spannung an den Anschlüssen der den Elektromotor versorgenden Versorgungsbatterie unter die Spannung an den Anschlüssen der Notstrombatterie fällt.

2. Elektrisches Antriebssystem (20) nach Anspruch 1,
wobei die Notstrombatterie parallel zu mindestens einer Versorgungsbatterie an jeden Elektromotor angeschlossen ist.

3. Elektrisches Antriebssystem (20) nach einem der Ansprüche 1 bis 2,
enthaltend ein Fehlererkennungsmodul, das dazu ausgelegt ist, den Übergang vom normalen Stromversorgungsmodus zum Notstromversorgungsmodus zu erkennen.

4. Elektrisches Antriebssystem (20) nach Anspruch 3,
wobei das Stromverteilungsnetz Schaltmittel umfasst, die dazu ausgelegt sind, die Versorgungsbatterien an die Elektromotoren anzuschließen bzw. davon zu trennen, wobei das elektrische Antriebssystem ein Steuermodul umfasst, das zum Ansteuern der Schaltmittel ausgelegt ist, um:
- im normalen Stromversorgungsmodus die Versorgungsbatterien an die Elektromotoren anzuschließen,
- im Notstromversorgungsmodus jede vom Fehlererkennungsmodul als fehlerhaft erkannte Versorgungsbatterie von den Elektromotoren zu trennen.

5. Elektrisches Antriebssystem (20) nach einem der Ansprüche 3 bis 4,
wobei das Fehlererkennungsmodul dazu ausgelegt ist, eine Benachrichtigung an einen Benutzer des Luftfahrzeugs zu senden, wenn die Elektromotoren im Notstromversorgungsmodus mit Strom versorgt werden.

6. Luftfahrzeug mit einem elektrischen Antriebssystem (20) nach einem der Ansprüche 1 bis 5.

## Claims

1. An electrical propulsion system (20) for an aerial vehicle, comprising a plurality of electric motors (21), a plurality of power supply batteries (22) for supplying power to said electric motors, and an electrical power distribution network connecting said power supply batteries to the electric motors, said electrical propulsion system (20) comprising an additional power supply battery, referred to as a backup battery (25), adapted to be connected to the electric motors by the electrical power distribution network, said electrical propulsion system being configured to supply power to the electric motors according to at least two different power supply modes:
- a power supply mode referred to as a normal power supply mode, wherein the backup battery (25) does not supply power to any of the electric motors (21), said electric motors being supplied with power by the power supply batteries (22),
- a power supply mode referred to as a backup power supply mode, wherein the backup battery (25) supplies power to at least one electric motor (21),
**characterized in that** the backup battery has a nominal voltage lower than the respective nominal voltages of the power supply batteries, and wherein the electrical power distribution network is configured so that the backup battery is connected to the electric motors in the normal power supply mode and in the backup power supply mode, and so that the backup battery begins to supply power to an electric motor when the voltage across the terminals of the power supply battery which is supplying power to said electric motor becomes lower than the voltage across the terminals of the backup battery.

2. The electrical propulsion system (20) according to claim 1, wherein the backup battery is connected to each electric motor in parallel with at least one power supply battery.

3. The electrical propulsion system (20) according to any one of claims 1 and 2, comprising a failure detection module configured to detect the switch from the normal power supply mode to the backup power supply mode.

4. The electrical propulsion system (20) according to claim 3, wherein the electrical power distribution network comprises switching means adapted to connect/disconnect the power supply batteries to/from the electric motors, said electrical propulsion system comprising a control module configured to control the switching means so as to:
- in the normal power supply mode: connect the power supply batteries to the electric motors,
- in the backup power supply mode: disconnect from the electric motors each power supply battery detected as faulty by the failure detection module.

5. The electrical propulsion system (20) according to any one of claims 3 and 4, wherein the failure detection module is configured to send a notification to a user of the aerial vehicle when the electric motors are being supplied with power in the backup power supply mode.

6. An aerial vehicle comprising an electrical propulsion system (20) according to any one of claims 1 to 5.
